# EUROPÄISCHE PATENTSCHRIFT

(11) **EP 0 870 425 B1**
(45) Veröffentlichungstag und Bekanntmachung des Hinweises auf die Patenterteilung: **22.06.2005**
(21) Anmeldenummer: 98102352.6
(22) Anmeldetag: 11.02.1998
(51) Int. Cl.: A01F 15/10

(54) **Kolbenpresse zur Herstellung von Pressballen aus Erntegut**
Plunger press for production of crop bales
Presse à piston pour la fabrication de balles de produits agricoles

(30) Priorität: 12.04.1997 DE 19715280
(43) Veröffentlichungstag der Anmeldung: 14.10.1998
(73) Patentinhaber: CLAAS KGaA, 33428 Harsewinkel (DE)
(72) Erfinder: Clostermeyer, Gerhard, 33334 Gütersloh (DE)

(56) Entgegenhaltungen:
- DE-A- 3 638 792
- DE-A- 19 531 240
- DE-B- 2 759 533
- FR-A- 2 346 963

## Beschreibung

Die Erfindung betrifft eine selbstfahrende oder gezogene Kolbenpresse zum Herstellen von Preßballen aus Erntegut mit einem in einem Preßkanal über einen Kurbeltrieb hin- und her bewegbaren Preßkolben, einen in den Preßkanal mündenden Gutzuführkanal sowie einem dem Preßkanal zugeordneten, aus Rafferhebel und Zinken bestehenden Gutraffer, der ebenfalls von einem Kurbeltrieb bewegbar ist, wobei die Bewegungsbahn der Rafferzinken zum Durchführen von Gutzuführ- oder Ladehüben veränderbar ist und wobei die Rafferhebel drehbar an Kurbelzapfen gelagert sind und ihre den Rafferspitzen entgegengesetzten Endbereiche mit einem Ende von Gelenkstangen in Verbindung stehen, deren andere Enden an einer ortsveränderlichen Lagerung befestigt sind, sowie einer Aufnahmevorrichtung für das Preßgut sowie Antriebs- und Steuerungsvorrichtungen zum Betrieb der Kolbenpresse.

Eine Kolbenpresse der zuvor genannten Art ist beispielsweise in der DE 36 38 792 dargestellt und beschrieben. Bei dieser Kolbenpresse ist der Kurbeltrieb für den Preßkolben mit dem Kurbeltrieb für die Rafferzinken derart zwangsverbunden, daß die Rafferzinken nach jeweils zwei Zuführhüben, in denen Erntegut lediglich in den Zuführkanal gefordert wird, einen Ladehub ausführen, durch den das im Zuführkanal zwischengespeicherte Erntegut in den Preßkanal übergeben wird. Dieser Bewegungsablauf der Rafferzinken wiederholt sich zyklisch, so daß selbst wenn kaum Erntegut im Zuführkanal vorhanden sein sollte jeder dritte Rafferhub unabdingbar ein Ladehub ist. Hieraus folgt, daß bei jedem Ladehub unterschiedlich viel und unterschiedlich vorgepreßtes Erntegut in den eigentlichen Preßkanal gefördert wird. Der sich hieraus ergebende Nachteil ist im Ergebnis darin zu sehen, daß als Endprodukt insbesondere bei schwarkender Menge des aufgenommenen Preßguts ungleichmäßig verdichtete oder geformte Preßballen gebildet werden können.

Zur Vermeidung ungleichmäßig ausgebildeter Ballen ist es bekannt (DE 27 59 533), in dem Zuführkanal einer Ballenpresse eine mit gesteuerten Fingern ausgebildete Förderwalze bzw. einen Rotationsförderer vorzusehen, welcher Erntegut gegen einen in den Zuführkanal hineinragenden Drucksensor fördert. Zusätzlich zu der Förderwalze sind Rafferzinken vorgesehen, die beim Erreichen eines voreingestellten Drukkes am Drucksensor derart geschaltet werden, daß sie durch Schlitze in den Förderkanal hineintauchen und das dort vorgepreßte Gut in den eigentlichen Preßkanal hineinfördern. Durch die Anordnung einer mit gesteuerten Fingern arbeitenden Fördertrommel in Verbindung mit den zusätzlich für den Ladehub erforderlichen Rafferzinken ist eine solche Presse außerordentlich bauaufwendig. Zudem reicht in schwierigen Verhältnissen die Förderwirkung und -reichweite der Fördertrommel nicht aus, um den Zuführkanal vollständig zu befüllen.

Außerdem ist in der DE 195 31 240 eine gattungsgemäße Kolbenpresse mit einem Rotationsförderer gezeigt, dessen Fördermittel in ihrer Bewegung entlang ihrer Förderkurve beweglich sind. In der Beschreibung ist als Aufgabe genannt, daß die Befüllung des Preßkanals mit weitestgehend gleichmäßig dichten Mengenportionen erfolgen soll. Die Vergleichmäßigung der Aufgabeportion soll durch eine Beeinflussung der Kurvenbahn der Fördermittel bewirkt werden, woraus sich eine Variation von Volumen und Dichte der Teilmengenportionen ergeben soll. Diese Lösung ist jedoch bei nur geringem Materialanfall untauglich, eine gleichmäßig dichte Aufgabeportion schaffen zu können, weil bei Unterschreitung eines erforderlichen Mindestvolumens das Füllvolumen einer Aufgabeportion nicht mehr dazu ausreicht, den Preßkanal bis oben auszufüllen. Zudem weisen Rotationsförderer neben den höheren Herstellkosten den prinzipbedingten Nachteil auf, daß die Rollen der Kulissenführung für die gesteuerten Finger einem hohen Verschleiß ausgesetzt sind.

Der vorliegenden Erfindung liegt daher die Aufgabe zugrunde, eine Kolbenpresse der eingangs näher bezeichneten Art, die ausschließlich mit hebelarmgesteuerten Rafferzinken als Förderorganen arbeitet, derart auszubilden, daß ohne Zuhilfenahme weiterer Förderelemente im Zuführkanal eine auch bei geringeren Mengen an zugeführtem Erntegut eine immer noch weitgehend gleichmäßige Vorpressung des Erntegutes und Formung eines Ballens erreicht werden kann.

Diese Aufgabe wird durch die Merkmale des Anspruchs 1 gelöst. Eine Positionsveränderung der den Rafferzinken fernen Lager der Gelenkstangen wird durch ein Steuersignal mindestens eines im oder am Zuführkanal vorgesehenen, direkt oder indirekt vom Fördergut betätigten Sensors-ausgelöst.

Das Steuersignal kann dabei von elektrischen, elektronischen, mechanischen, hydraulischen oder gleichwirkenden Sensoren oder Aktoren ermittelt und/oder übertragen werden. Das Fördergut 'kann direkt auf den Sensor wirken, oder eine Meßgröße wird über Hebel, Taster, Licht oder sonstige Übertragungsmittel indirekt auf den Sensor übertragen. Bei einer indirekten Übertragung der Wirkung des Förderguts auf den Sensor kann der Sensor auch außerhalb des Zuführkanals angeordnet sein. Auf die vorgeschlagene Weise wird erreicht, daß im Gegensatz zu der Presse nach der deutschen Patentschrift 36 38 792 jeweils nur dann Ladehübe ausgeführt werden, wenn das im Zuführkanal befindliche Gut in ausreichender Menge vorhanden und genügend vorgepreßt ist. Die Rafferzinken können abhängig vom Steuersignal unterschiedliche Kurvenbahnen durchlaufen, von denen zumindest eine über das Steuersignal schaltbare Kurvenbahn die Beladung der Preßkammer mit einer Portion des Preßgutes ermöglicht. Eine vollständige Gleicheit in Form und Dichte der Ladeportionen kann mit der Vorrichtung zwar nicht erzielt werden, durch das Auslassen eines oder mehrerer Ladehübe ist jedoch sichergestellt, daß auch bei geringerem Anfall von Preßgut immer ausreichend Preßgut in die Preßkammer gefördert wird, um das Preßgut ausreichend vorzuverdichten und die preßkammer in voller Höhe ausfüllen zu können. Diese Wirkungen sind sehr wichtige Voraussetzungen, um gleichmäßig geformte Ballen bilden zu können.

Weitere vorteilhafte Ausführungsformen der Erfindung ergeben sich aus den Unteransprüchen und der gegenständlichen Beschreibung.

Im folgenden soll die Erfindung anhand eines Ausführungsbeispieles und einiger dieses schematisch darstellender Figuren näher erläutert werden. Es zeigen:
- Figur 1:: eine Kolbenpresse mit einer oberhalb der Preßkammer angeordneten Steuervorrichtung,
- Figur 2:: eine Kolbenpresse mit einer unterhalb der Preßkammer angeordneten Steuervorrichtung,

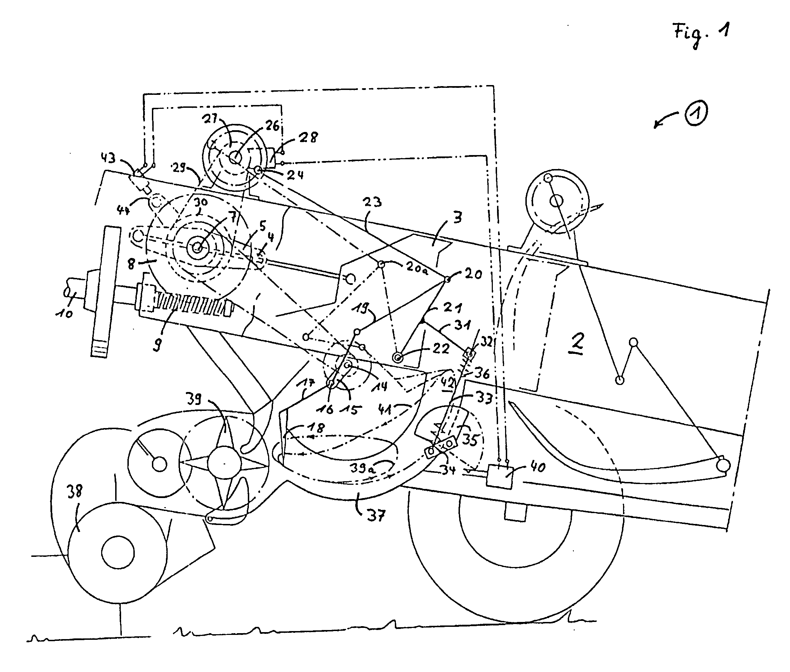

In Figur 1 ist mit 1 eine Presse bezeichnet, die einen Preßkanal 2 und einen in diesem hin- und her beweglichen Preßkolben 3 aufweist. Letzterer ist über eine Pleuelstange mit einem Kurbelzapfen 4 verbunden, welcher an einem Kurbelarm 5 befestigt ist, der mit der Welle 7 drehfest verbunden ist. Diese wird über ein Schneckenrad 8 und über eine Schnecke 9 angetrieben. Die Schnecke 9 ist in an sich bekannter Weise über die Welle 10 an die Zapfwelle des die Presse 1 ziehenden Traktors gekuppelt. Ein ähnlicher Antriebsaufbau ergibt sich für eine selbstfahrende Kolbenpresse. Die Welle 7 und die Rafferkurbelwelle 14 mit den Kurbelarmen 15 stehen in einem konstanten Übersetzungsverhältnis zueinander. An den freien Enden der Kurbelarme 15 sind Kurbelzapfen 16 angeordnet, an denen die Rafferhebel 17 drehbar gelagert sind. Die den Rafferzinken 18 abgewandten Enden der Rafferhebei 17 sind mit Gelenkstangen 19 verbunden, deren Lager 20 in ihrer Lage veränderbar sind. Zu diesem Zweck sind die Lager 20 an Hebeln 21 angelenkt, die um einen Fixpunkt 22 schwenkbar sind. Zumindest eines der Lager 20 ist über eine Koppel 23 mit einem Zapfen 24 verbunden, dessen Kurbelarm an einer Welle 26 befestigt ist. Auf die Welle 26 ist ein Kettenrad 27 aufgesetzt, das mit der Welle 26 bedarfsweise über eine Eintourenkupplung 28 verbindbar ist. Eine Kette 29 umschlingt sowohl das Kettenrad 27 wie auch das auf der Kurbelwelle für den Preßkolben 3 fest aufgesetzte Kettenrad 30.

An dem Hebel 21 ist ein Arm 31 angebracht, dessen freies Ende einen Führungskörper 32 trägt. Der Führungskörper 32 weist eine Durchgangsbohrung auf, durch die eine Stange 33 mit Spiel hindurchgreift. Letztere ist an einem Schalthebel 34 angelenkt, der fest mit einem schwenkbaren Segment 35 verbunden ist. Die Stange 33 ist von einer Feder 36 umgeben, die sich mit ihrem einen Ende am Führungskörper 32 und mit ihrem anderen Ende am Schalthebel 34 abstützt. Hierdurch wird der Schalthebel 34 und damit auch das schwenkbare Segment 35 in der mit vollen Linien dargestellten Lage gehalten, in der das schwenkbare Segment teilweise in den Gutzuführkanal 37 hineinragt. Der Schalthebel 34 könnte auch an einer beweglich angeordneten Wandung des Zuführkanals 37 angeordnet sein, oder die Befüllung des Zuführkanals 37 könnte anstelle mittels einer Schaltung über einen Schalthebel 34 auch über eine Messung der mechanischen Belastung von Wandungen des Zuführkanals 37, von Rahnenteilen oder von Arbeitskomponenten wie beispielsweise des Raffers über Dehnmeßstreifen, auf Drehpotentiometer übertragene Bewegungen von Meßfingern, über optische Sensoren, die den Füllstand des Zuführkanals 37 überwachen, oder sonstige gleichwirkende Mittel ermittelt werden. Die Aufzählung dieser Meßmittel und Sensoren (55, 56) ist nur als beispielhaft zu verstehen, dem Fachmann dürfte es keine Schwierigkeiten bereiten, diese oder andere an sich bekannten Sensor- und Meßmittel (55, 56) erfindungsgemäß einzusetzen. Anhand der Zuordnung der einzelnen Elemente zueinander wird festgelegt, wie kritische Füllzustände des Zuführkanals 37 vermieden werden können. Ein kritischer Füllzustand kann entstehen, wenn der Schalthebel 34 wegen zu geringer Befüllung des Zuführkanals 37 die Steuerkurve für den Ladehub nicht einschaltet, dann jedoch während des nächsten Arbeitszyklus des Preßkolbens 3 so viel Preßgut in den Zuführkanal 37 von den Rafferzinken 18 nachgefördert wird, daß dessen Fassungsvermögen überfordert wird und sich infolgedessen der Zuführkanal zusetzt, die Überlastkupplungen ansprechen oder Preßgutverluste auftreten, weil Preßgut aus der Kolbenpresse fällt. Um solche Überlastungen zu vermeiden, ist es wichtig, die Form der Bewegungsbahn 41, die Positionierung des Segments 35 im Zuführkanal 37, die Federkraft der Feder 36, den Schwenkweg des Schalthebels 34 bis zum Schaltpunkt sowie dessen Schwenkwinkel gut aufeinander abzustimmen. Als grober Anhaltspunkt für die Entscheidung, ob die Gutportion in die Preßkammer 3 gefördert werden soll oder nicht, kann gelten, daß bei einer Befüllung des Zuführkanals um mehr als 2/3 des Fassungsvermögens des Zuführkanals 37 im Zweifel eine Zuförderung des Preßgutes in die Preßkammer 3 erfolgen sollte. Dieser Wert kann sich jedoch preßgutabhängig verändern, weil sich die Guteigenschaften von Stroh, Heu oder Silage deutlich voneinander unterscheiden, und es kann vorteilhaft eine preßgutabhängige Steuerung der Zuförderung vorgesehen sein, bei der der Nutzer der Kolbenpresse nur das Preßgut vorwählt und die Steuerung der Kolbenpresse 1 automatisch die passenden Schaltpunkte auswählt.

Während des Betriebes der Presse 1 wird das auf dem Acker beispielsweise von einem Mähdrescher abgelegte Schwad durch eine Zinkentrommel 38 aufgenommen und, gegebenenfalls unter Zwischenschaltung eines mit Schneidmessern versehenen zusammenwirkenden Rotors 39, in den Zuführkanal 37 hinein geführt. Dieses Gut wird dann von den Rafferzinken 18 in Richtung auf das Segment 35 bewegt. Die Rafferzinken durchlaufen dabei die mit 39a bezeichnete Bewegungsbahn. Sobald sich eine genügend große Menge Erntegut mit entsprechend hohem Druck vor dem schwenkbaren Segment 35 aufgebaut hat, wird dieses entgegen der Kraft der Feder 36 im Uhrzeigersinn verschwenkt und betätigt hierdurch einen Schalter 40. Der Schalter 40 kann nur dann auf die Kupplung 28 einwirken, wenn auch der Schalter 43 betätigt wird, der die Synchronsierung der Bewegung der Rafferzinken 18 mit der des Preßkolbens 3 bewirken soll. Durch den Schalter 43 wird verhindert, daß die Rafferzinken einen Ladehub ausführen, wenn der Preßkolben 3 mit seiner Unterseite die Zuführöffnung 42 verschließt. Der Schalter 43 wird durch die am Kurbelarm 5 befestigte Schaltkulisse 44 betätigt, wenn sich der Kolben 3 zu seiner in Fahrtrichtung gesehenen vorderen Totpunktlage hinbewegt und dadurch die Ladeöffnung 42 vom Kolben freigegeben wird. Die Synchronisierung der Steuervorrichtung mit der Bewegung des Kolbens 3 kann jedoch auch über andere Schalter oder Sensoren überwacht werden, wie beispielsweise dem Preßkolben 3 direkt zugeordnete mechanische Tastfinger, elektrische oder optische Sensoren, die elektrische Steuersignale übermitteln, oder sonstige Mittel. Die Betätigung des Schalters 43 bewirkt, daß über die Kupplung 28 das Kettenrad 27 für den Zeitraum zumindest eines Rafferhubes fest mit der Kurbelwelle 26 antriebsverbunden ist, so daß die Lager 20 über die Koppel 23 um ihren Fixpunkt 22 in die Position 20a verschwenkt werden. Da der Arm 31 mit nach oben schwenkt, wird die Feder 36 entspannt und die Segmente 35 werden leicht durch das Erntegut aus dem Zuführkanal 37 herausgeschwenkt, sodaß die Segmente 35 der Gutförderung keinen nennenswerten Widerstand leisten. Aufgrund dieser Lageänderung der Lager 20 ändert sich auch die Bewegungsbahn der Rafferzinken 18, die dann für zumindest einen Hub die mit 41 bezeichnete Bewegungsbahn für einen Ladehub durchlaufen. Hierdurch wird das sich im Zuführkanal 37 befindliche und vorgepreßte Gut durch die Öffnung 42 in den Preßraum 2 der Ballenpresse 1 gefördert, wobei der Preßkolben 3 die mit vollen Linien dargestellte Stellung einnimmt und die Öffnung 42 freigibt. Nach Beendigung des Ladehubes werden die Lager 20 in ihre Grundstellung zurückbewegt und damit auch gleichzeitig das Segment 35 wieder in den Zuführkanal 37 hineingeschwenkt. In dieser Grundstellung durchlaufen die Rafferzinken 18 dann wieder die mit 39a bezeichnete Bahn. Zu erwähnen wäre noch, daß die Antriebe von Welle 7 nach Welle 14 und nach Welle 26 ein Übersetzungsverhältnis von i = 1: 3 oder i = 1 : 2 haben. Bei i = 1 : 2 gehen dem Ladehub mindestens ein Vorpreßhub und bei i = 1: 3 mindestens zwei Vorpreßhübe voraus.

Anstatt die Lager 20 durch die mit den Bezugsziffern 24 bis 30 versehene Steuervorrichtung zu verschwenken, ist es auch denkbar, die Verschwenkung durch einen nicht näher dargestellten Elektro- oder Hydromotor zu bewirken, der in vergleichbarer Weise mit der Bewegung des Kolbens 3 synchronisiert ist.

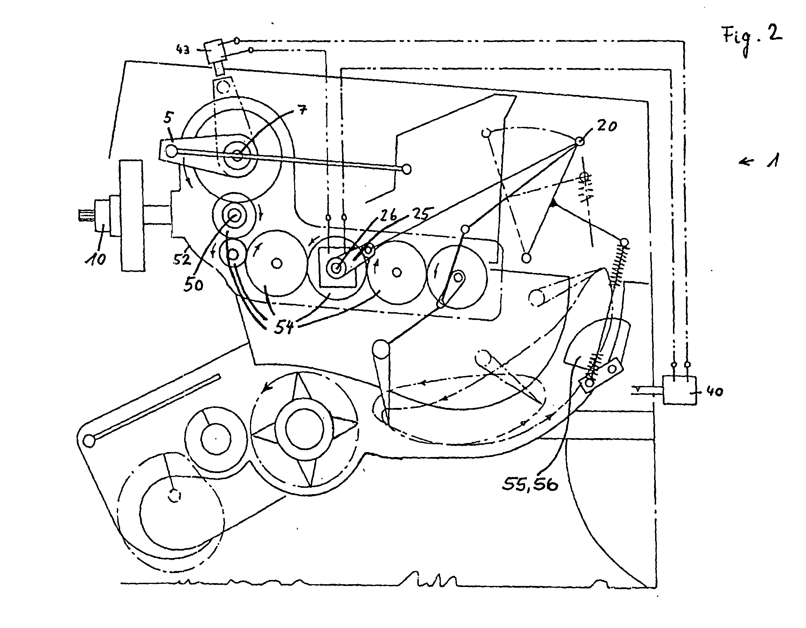

Figur 2 zeigt die erfindungsgemäße Lösung in einer Kolbenpresse 1 mit einem anderen Aufbau des Getriebestrangs. Anstatt den Antrieb für die Welle 26 von der Welle 7 der Kurbelarme 5 abzuleiten, ist in dem in Figur 2 gezeigten Ausführungsbeispiel die Antriebskraft von einer zentralen Antriebswelle 50 im Hauptgetriebe 52 über die miteinander in Antriebsverbindung stehenden Stirnräder 54 abgeleitet. Der Vorteil dieser Anordnung ist in den gegenüber Kettentrieben wartungsärmeren und weniger verschleißanfälligen Stirnradstufen zu sehen. Zudem ist die Bauhöhe einer entsprechend diesem Ausführungsbeispiel ausgestatteten Kolbenpresse 1 geringer, und der Bauaufwand ist geringer, da die Antriebskraft für die Steuervorrichtung durch Verlängerung einer Lagerwelle für ein Stirnrad 54 bereitgestellt werden kann. Auf die Lagerwelle 26 braucht nur die Kurbel 25 sowie die Eintourenkupplung 28 aufgesteckt zu werden. Im übrigen gelten für das in Figur 2 gezeigte Ausführungsbeispiel die Erläuterungen zur Figur 1 entsprechend.

## Patentansprüche

1. Selbstfahrende oder gezogene Kolbenpresse zum Herstellen von Pressballen aus Erntegut mit sich über einem in einen Presskanal (2) über einen Kurbeltrieb (4, 5, 7) hin- und herbewegenden Presskolben (3), einem in den Presskanal (2) mündenden Gutzuführkanal (37) sowie einem, dem Zuführkanal (37) zugeordneten, aus Rafferhebeln (17) und Rafferzinken (18) bestehenden Gutraffer, der ebenfalls von einem Kurbeltrieb (14, 15) bewegbar ist, wobei die Bewegungsbahn (39a, 41) der Rafferzinken (18) zum Durchführen von Gutzuführ- und Ladehüben veränderbar ist und wobei die Rafferhebel (17) drehbar an Kurbelzapfen (16) gelagert sind und ihre den Rafferspitzen entgegengesetzten Endbereiche mit einem Ende von Gelenkstangen (19) in Verbindung stehen, deren andere Enden an einer ortsveränderlichen Lagerung (20) befestigt sind, sowie einer Aufnahrnevorrichtung (38) für das Pressgut und Steuerungs- und Antriebsmittel zum Betrieb der Kolbenpresse,
**dadurch gekennzeichnet, dass**
eine Positionsveränderung der den Rafferzinken (18) fernen Lager (20) der Gelenkstangen (19) durch ein Steuersignal mindestens eines im oder am Zuführkanal (37) vorgesehenen, direkt oder indirekt vom Fördergut betätigten Sensors (35, 55, 56) ausgelöst wird und wobei die Positionsveränderung der den Rafferzinken (18) fernen Lager (20) zum Umschalten der Bewegungsbahn (39a, 41) der Rafferzinken (18) zwischen einer Bewegungsbahn (39a), in der zumindest ein Gutzuführhub ausgeführt wird, und einer Bewegungsbahn (41), in der zumindest ein Ladehub ausgeführt wird, führt.

2. Kolbenpresse nach Anspruch 1,
**dadurch gekennzeichnet,**
**dass** die Lager (20) von Hebeln (21) aufgenommen werden und die Hebel (21) um einen Fixpunkt (22) schwenkbar sind.

3. Kolbenpresse nach Anspruch 2,
**dadurch gekennzeichnet,**
**daß** mindestens eine Koppel (23) mit dem Hebel (21) verbunden ist und über einen Kurbelzapfen (24) hin- und her bewegbar ist.

4. Kolbenpresse nach einem oder mehreren der Ansprüche 1 bis 3,
**dadurch gekennzeichnet,**
**daß** der den Kurbelzapfen (24) tragende Arm (25) an einer Welle (26) befestigt ist, die über eine Kupplung (28) bedarfsweise mit der Kurbelwelle (7) des Presskolbenantriebes kuppelbar ist.

5. Kolbenpresse nach Anspruch 4,
**dadurch gekennzeichnet,**
**daß** die Welle (26) über Antriebsmittel (54) antriebsverbunden ist mit einer zentralen Antriebswelle (50).

6. Kolbenpresse nach einem oder mehreren der Ansprüche 4 und 5,
**dadurch gekennzeichnet,**
**dass** die Kupplung (28) von dem im Zuführkanal (37) vorgesehenen als Drucksensor (56) ausgeführten Sensor (55) schaltbar ist, wenn sich der Kolben (3) zum vorderen Totpunkt hinbewegt.

7. Kolbenpresse nach einem oder mehreren der Ansprüche 1 bis 6,
**dadurch gekennzeichnet,**
**dass** der Drucksensor (56) als ein in den Zuführkanal (37) hineinragendes und mittels Federkraft (Feder 36) in Grundstellung gehaltenes Segment (35) ausgebildet ist.

8. Kolbenpresse nach Anspruch 7,
**dadurch gekennzeichnet,**
**daß** die auf das Segment (35) einwirkende Federkraft (Feder 36) je nach Preßgut einstellbar ist.

9. Kolbenpresse nach einem oder mehreren der Ansprüche 7 und 8,
**dadurch gekennzeichnet,**
**daß** das Segment (35) nach Überwinden der dieses in Grundstellung haltenden Federkraft (Feder 36) durch das in den Zuführkanal von den Rafferzinken (18) hineingeförderte Erntegut gegen einen Anschlag verschwenkt und dabei einen Schalter (40) betätigt, der zusammen mit dem Schalter (43) die Eintourenkupplung (28) auslöst.

10. Kolbenpresse nach Anspruch 9,
**dadurch gekennzeichnet,**
**daß** mit dem Hebel (34) eine Schubstange verbunden ist, mit der die Eintourenkupplung (28) betätigt wird.

11. Kolbenpresse nach einem oder mehreren der Ansprüche 9 und 10,
**dadurch gekennzeichnet,**
**daß** der Schalter (43) von einer Schaltkulisse (44) dann geschaltet wird, wenn sich der Kolben zum vorderen Totpunkt hinbewegt.

12. Kolbenpresse nach einem oder mehreren der Ansprüche 1 bis 11,
**dadurch gekennzeichnet,**
**daß** zum Betätigen der Kupplung (28) und des Kolbens (3) in Abhängigkeit der Stellung des Sensors (35) elektrische, mechanische oder/und hydraulische Mittel verwendet werden.

13. Kolbenpresse nach einem oder mehreren der Ansprüche 1 bis 12,
**dadurch gekennzeichnet,**
**daß** mit dem Segment (35) ein Schalthebel (34) fest verbunden ist, an dem eine Stange (33) angelenkt ist, welche mit ihrem schalthebelfernen Bereich einen Führungskörper (32) mit Spiel durchgreift, der von einem Arm (31) getragen ist, der seinerseits mit dem um einen Fixpunkt (22) schwenkbaren Hebel (21) verschweißt ist.

14. Kolbenpresse nach einem oder mehreren der Ansprüche 7 bis 13,
**dadurch gekennzeichnet,**
**daß** während des Ladehubes die auf das Segment (35) einwirkende Federkraft (Feder 36) aufgehoben oder verringert wird.

15. Kolbenpresse nach einem oder mehreren der Ansprüche 9 bis 14,
**dadurch gekennzeichnet,**
**daß** sich bei gleichmäßigen starken Schwaden zur Erzielung maxmalen Durchsatzes der Schalter (40) manuell dauernd einschalten läßt.

16. Kolbenpresse nach einem oder mehreren der Ansprüche 1 bis 15,
**dadurch gekennzeichnet,**
**daß** die Steuervorrichtung (24-30) durch einen elektrischen oder hydraulischen Motor antreibbar ist.

17. Kolbenpresse nach einem oder mehreren der Ansprüche 1 bis 16,
**dadurch gekennzeichnet,**
**daß** zur Steuerung und/oder Regelung der Bewegungsbahnen (39a, 41) der Rafferzinken (18) mit einer Überwachungselektronik verbundene Sensoren und Aktoren eingesetzt sind.

## Claims

1. A self-propelled or towed piston press for producing pressed bales from crop material comprising a pressing piston (3) which is reciprocated into and out of a pressing passage (2) by way of a crank drive (4, 5, 7), a crop feed passage (37) which opens into the pressing passage (2), and a crop gathering device which is associated with the feed passage (37) and which comprises gathering levers (17) and gathering tines (18) and which is also movable by a crank drive (14, 15), wherein the path of movement (39a, 41) of the gathering tines (18) is variable for performing crop material feed and loading strokes, and wherein the gathering levers (17) are mounted rotatably to crank pins (18) and their end regions in opposite relationship to the gathering device tips are connected to one end of linkage rods (19) whose other ends are fixed to a variable-position mounting (20), and a pick-up device (38) for the pressed material and control and drive means for operation of the piston press,
**characterised in that**
a change in position of the mountings of the linkage rods (19), which mountings are remote from the gathering tines (18), is triggered by a control signal of at least one sensor (35, 55, 56) which is provided in or at the feed passage (37) and which is actuated directly or indirectly by the material being conveyed, and wherein the change in position of the mountings (20) remote from the gathering tines (18) results in switching over of the path of movement (39a, 41) of the gathering tines (18) between a path of movement (39a) in which at least one crop material feed stroke is performed and a path of movement (41) in which at least one loading stroke is performed.

2. A piston press according to claim 1 **characterised in that** the mountings (20) are carried by levers (21) and the levers (21) are pivotable about a fixed point (22).

3. A piston press according to claim 2 **characterised in that** at least one connecting rod (23) is connected to the lever (21) and is reciprocatable by way of a crank pin (24).

4. A piston press according to one or more of claims 1 to 3 **characterised in that** the arm (25) carrying the crank pin (24) is fixed to a shaft (26) which if required can be coupled by way of a clutch (28) to the crankshaft (7) of the pressing piston drive.

5. A piston press according to claim 4 **characterised in that** the shaft (26) is drivingly connected by way of drive means (54) to a central drive shaft (50).

6. A piston press according to one or more of claims 4 and 5 **characterised in that** the clutch (28) is shiftable by the sensor (55) which is provided in the feed passage (37) and which is in the form of a pressure sensor (56) when the piston (3) moves towards the front dead centre point.

7. A piston press according to one or more of claims 1 to 6 **characterised in that** the pressure sensor (56) is in the form of a segment (35) which projects into the feed passage (37) and which is held in the basic position by means of spring force (spring 36).

8. A piston press according to claim 7 **characterised in that** the spring force (spring 36) acting on the segment (35) is adjustable according to the respective material being pressed.

9. A piston press according to one or more of claims 7 and 8 **characterised in that** the segment (35), after overcoming the spring force (spring 36) holding it in the basic position, is pivoted against an abutment by the crop material which is conveyed into the feed passage by the gathering tines (18), and in so doing actuates a switch (40) which together with the switch (43) triggers a single-revolution clutch (28).

10. A piston press according to claim 9 **characterised in that** connected to the lever (34) is a thrust rod with which the single-revolution clutch (28) is actuated.

11. A piston press according to one or more of claims 9 and 10 **characterised in that** the switch (43) is switched by a switching gate (44) when the piston moves towards the front dead centre point.

12. A piston press according to one or more of claims 1 to 11 **characterised in that** electrical, mechanical and/or hydraulic means are used for actuation of the clutch (28) and the piston (3) in dependence on the position of the sensor (35).

13. A piston press according to one or more of claims 1 to 12 **characterised in that** fixedly connected to the segment (35) is a shift lever (34) to which there is pivotably connected a rod (33) which with its region remote from the shift lever engages with clearance through a guide body (32) carried by an arm (31) which in turn is welded to the lever (21) which is pivotable about a fixed point (22).

14. A piston press according to one or more of claims 7 to 13 **characterised in that** during the loading stroke the spring force (spring 36) acting on the segment (35) is removed or reduced.

15. A piston press according to one or more of claims 9 to 14 **characterised in that** when dealing with uniformly large swathes the switch (40) can be manually continuously switched on to achieve a maximum throughput.

16. A piston press according to one or more of claims 1 to 15 **characterised in that** the control device (24-30) is drivable by an electric or hydraulic motor.

17. A piston press according to one or more of claims 1 to 16 **characterised in that** actuators and sensors connected to an electronic monitoring system are used for controlling and/or regulating the paths of movement (39a, 41) of the gathering tines (18).

## Revendications

1. Presse à piston automotrice ou tractée pour la fabrication de balles compressées de produit de récolte, comportant un piston de compression (3), qui est déplacé avec un mouvement de va-et-vient dans un canal de compression (2) par l'intermédiaire d'un mécanisme à bielle et manivelle (4, 5, 7), un canal d'amenée de produit (37), qui débouche dans le canal de compression (2), un ameneur de produit associé au canal d'amenée (37), qui comprend des leviers (17) et des dents (18) d'ameneur et est également mu par un mécanisme à bielle et manivelle (14, 15), la trajectoire de déplacement (39a, 41) des dents d'ameneur (18) pouvant être modifiée pour l'exécution de courses d'amenée de produit et de chargement, les leviers d'ameneur (17) étant montés tournants sur des manetons (16) et leurs parties d'extrémité opposées aux dents d'ameneur étant reliées à une extrémité de bielles (19), dont l'autre extrémité est fixée à un système de palier (20) mobile, ainsi qu'un dispositif de ramassage (38) pour le produit à compresser et des moyens de commande et d'entraînement pour l'entraînement de la presse à piston, **caractérisée par le fait qu'**un changement de position des paliers (20) des bielles (19) éloignés des dents d'ameneur (18) est déclenché par un signal de commande d'au moins un capteur (35, 55, 56) prévu dans ou sur le canal d'amenée (37) et actionné de manière directe ou indirecte par le produit transporté, le changement de position des paliers (20) éloignés des dents d'ameneur (18) étant opéré pour commuter la trajectoire de déplacement (39a, 41) des dents d'ameneur (18) entre une trajectoire de déplacement (39a) dans laquelle au moins une course d'amenée de produit est exécutée, et une trajectoire de déplacement (41), dans laquelle au moins une course de chargement est exécutée.

2. Presse à piston selon la revendication 1, **caractérisée par le fait que** les paliers (20) sont disposés sur des leviers (21) et que les leviers (21) peuvent pivoter autour d'un point fixe (22).

3. Presse à piston selon la revendication 2, **caractérisée par le fait qu'**au moins une bielle (23) est reliée au levier (21) et peut être déplacée avec un mouvement de va-et-vient par l'intermédiaire d'un maneton (24).

4. Presse à piston selon une ou plusieurs des revendications 1 à 3, **caractérisée par le fait que** le bras (25) qui porte le maneton (24) est fixé à un arbre (26) qui peut être couplé le cas échéant au vilebrequin (7) d'entraînement de la presse à piston par l'intermédiaire d'un embrayage (28).

5. Presse à piston selon la revendication 4, **caractérisée par le fait que** l'arbre (26) est lié sur le plan de l'entraînement à un arbre d'entraînement (50) central, par l'intermédiaire de moyens d'entraînement (54).

6. Presse à piston selon une ou plusieurs des revendications 4 et 5, **caractérisée par le fait que** l'embrayage (28) peut être déclenché par le capteur (55), conformé en capteur de pression (56), prévu dans le canal d'amenée (37), lorsque le piston (3) se déplace en direction du point mort antérieur.

7. Presse à piston selon une ou plusieurs des revendications 1 à 6, **caractérisée par le fait que** le capteur de pression (56) est réalisé sous la forme d'un segment (35) qui fait saillie dans le canal d'amenée (37) et est maintenu dans la position de base par une force élastique (ressort 36).

8. Presse à piston selon la revendication 7, **caractérisée par le fait que** la force élastique (ressort 36) qui agit sur le segment (35) est réglable en fonction du produit à compresser.

9. Presse à piston selon une ou plusieurs des revendications 7 et 8, **caractérisée par le fait que** le segment (35), une fois vaincue la force élastique (ressort 36) qui le maintient dans la position de base, est amené par pivotement contre une butée par le produit de récolte transporté par les dents d'ameneur (18) et actionne un commutateur (40) qui en association avec le commutateur (43) déclenche l'embrayage monotour (28).

10. Presse à piston selon la revendication 9, **caractérisée par le fait qu'**une tringle de commande par laquelle l'embrayage monotour (28) est actionné est reliée au levier (34).

11. Presse à piston selon une ou plusieurs des revendications 9 et 10, **caractérisée par le fait que** le commutateur (43) est commuté par une coulisse de commutation (44) lorsque le piston se déplace en direction du point mort antérieur.

12. Presse à piston selon une ou plusieurs des revendications 1 à 11, **caractérisée par le fait que** pour l'actionnement de l'embrayage (28) et du piston (3) en fonction de la position du capteur (35), on utilise des moyens électriques, mécaniques et/ou hydrauliques.

13. Presse à piston selon une ou plusieurs des revendications 1 à 12, **caractérisée par le fait qu'**un levier de commutation (34) est lié rigidement au segment (35), levier de commutation auquel est articulée une tige (33), dont la partie éloignée du levier traverse avec jeu un corps de guidage (32) porté par un bras (31), qui de son côté est soudé à un levier (21) pivotant autour d'un point fixe (22).

14. Presse à piston selon une ou plusieurs des revendications 7 à 13, **caractérisée par le fait que** pendant la course de chargement, la force élastique (ressort 36) qui agit sur le segment est annulée ou diminuée.

15. Presse à piston selon une ou plusieurs des revendications 9 à 14, **caractérisée par le fait qu'**en présence d'andains d'épaisseur régulière, le commutateur (40) peut être enclenché manuellement en continu aux fins d'obtenir un débit maximal.

16. Presse à piston selon une ou plusieurs des revendications 1 à 15, **caractérisée par le fait que** le dispositif de commande (24-30) est entraîné par un moteur électrique ou hydraulique.

17. Presse à piston selon une ou plusieurs des revendications 1 à 16, **caractérisée par le fait que** pour commander et/ou régler les trajectoires de déplacement (39a, 41) des dents d'ameneur (18), on utilise des capteurs et des actionneurs reliés à une électronique de surveillance.
